# EUROPEAN PATENT APPLICATION

(11) **EP 4 632 555 A1**
(43) Date of publication of application: **15.10.2025**
(21) Application number: 23909508.6
(22) Date of filing: 20.10.2023
(51) Int. Cl.: G06F 8/30

(54) **PROJECT DEVELOPMENT SYSTEM AND METHOD BASED ON CLOUD SERVICE, AND COMPUTING DEVICE CLUSTER**

(30) Priority: 27.12.2022 CN 202211714432
(71) Applicant: Huawei Cloud Computing Technologies Co., Ltd., Guiyang, Guizhou 550025 (CN)
(72) Inventor: DONG, Keqin, Guiyang, Guizhou 550025 (CN); ZENG, Zhengyang, Guiyang, Guizhou 550025 (CN)
(74) Representative: Isarpatent
(86) International application number: PCT/CN2023/125573
(87) International publication number: WO 2024/139574

(57) **Abstract**

This application discloses a cloud service-based project development system and method, and a computing device cluster, and relates to the field of computer technologies. The method is applied to a project development system of a cloud service. A requirement management node obtains requirement information of a project, sends a branch creation instruction to a code hosting node in the system based on the requirement information, and sends an instance creation instruction to an integrated development environment IDE management node. The code hosting node creates, in response to the branch creation instruction, a code branch corresponding to the project. The IDE management node creates, in response to the instance creation instruction, an IDE instance corresponding to the project, and obtains and runs a code file of the project from the code branch based on the IDE instance. Based on this, the requirement information of the project is used to associate each process phase in a project development process in a standard manner. This greatly reduces user's operations required in a plurality of service nodes, effectively implements cross-service process coordination and information tracing, and effectively improves efficiency of project development.

## Description

This application claims priority to Chinese Patent Application No. 202211714432.X, filed on December 27, 2022 and entitled "CLOUD SERVICE-BASED PROJECT DEVELOPMENT SYSTEM AND METHOD, AND COMPUTING DEVICE CLUSTER", which is incorporated herein by reference in its entirety.

### TECHNICAL FIELD

This application relates to the field of computer technologies, and in particular, to a cloud service-based project development system and method, and a computing device cluster.

### BACKGROUND

A basic process of software development includes phases such as requirement proposal, design of a project organizational structure, software coding, function testing, and release. With development and gradual maturity of a cloud service, a development process of a software project can be implemented through various services provided by a cloud platform. For example, a code hosting service can provide functions such as version control and integration of code files during project development; a requirement management service provides services such as project planning and design, and requirement and problem delivery for a requirement party, a developer, a tester, and the like of project development; and a cloud integrated development environment (cloud integrated development environment, Cloud IDE) service provides a computing resource, a storage resource, and the like on a cloud for processes such as code writing, compilation and debugging, and running preview during project development.

Currently, the cloud service can cover all phases of project development. However, because cloud services are independent of each other, a user can only use a corresponding function in a corresponding cloud service, and cross-service process coordination and information tracing can only be performed by the user manually, resulting in low development efficiency. For example, the requirement party submits a new requirement in the requirement management service, but a developer or a tester needs to manually fill in related information of subsequent development and testing of the requirement, and feed back the information to the requirement management service. For another example, a developer writes a new segment of code according to a requirement delivered by the requirement management service. When submitting the segment of code to the code hosting service, the developer needs to manually fill in a requirement implemented by the segment of code. Therefore, a method is urgently needed to efficiently implement cross-service process coordination and information tracing, and improve efficiency of project development.

### SUMMARY

Embodiments of this application provide a cloud service-based project development system and method, and a computing device cluster, to efficiently implement cross-service process coordination and information tracing, and improve efficiency of project development. The technical solutions are as follows.

According to a first aspect, a cloud service-based project development system is provided, and used in a cloud platform. The system includes a requirement management node, a code hosting node, and an integrated development environment IDE management node.

The requirement management node is configured to: obtain requirement information for a project, send a branch creation instruction to the code hosting node based on the requirement information, and send an instance creation instruction to the IDE management node. The requirement information is used to describe a requirement and a process of the project.

The code hosting node is configured to create, in response to the branch creation instruction, a code branch corresponding to the project. The code branch is used to store a code file of a to-be-developed function of the project.

The IDE management node is configured to: create, in response to the instance creation instruction, an IDE instance corresponding to the project, and obtain and run the code file from the code branch of the code hosting node based on the IDE instance.

The requirement management node is configured to provide a requirement management service for a project development process. The requirement management service mainly includes associating and sorting work tasks that need to be completed during project development. The work task is, for example, a requirement, a task, a defect (problem), and a code vulnerability bug. The code hosting node is configured to provide a service related to a cloud code repository for project development. In some embodiments, functions of the code hosting node include code version control, code cloning, download, submission, code architecture check, code coding problem check, branch merging, code review, and the like. The IDE management node is configured to provide a cloud integrated development environment IDE for project development. The IDE is equivalent to a development suite that integrates a code writing function, an analysis function, a compilation function, a debugging function, and the like.

The foregoing technical solution provides a cross-service project development mode, in which the requirement information of the project is used to associate each process phase in a project development process in a standard manner. This greatly reduces user's operations required in a plurality of service nodes, effectively implements cross-service process coordination and information tracing, and effectively improves efficiency of project development.

In a possible implementation, the requirement information includes requirement description information and process information, the requirement description information indicates a function to be implemented by developing the project, and the process information indicates a code repository related to development of the project; and the requirement management node is configured to:
obtain the requirement description information, and send the requirement description information to a terminal used by a developer corresponding to the project; and
in response to a confirmation operation of the developer for the requirement description information, obtain the process information submitted by the developer.

According to the foregoing technical solution, a requirement information collection mechanism is provided with reference to roles of all parties in the project development process, so that a requirement can be delivered and information can be confirmed in a requirement information collection process, thereby implementing information tracing and a plurality of times of confirmation, and improving reliability of requirement information.

In a possible implementation, the requirement information includes the process information, and the process information indicates the code repository related to development of the project; and the code hosting node is configured to:
in response to the branch creation instruction, check out a baseline code branch corresponding to the project from the code repository, where the baseline code branch is used to store a code file of a developed function of the project; and
create the code branch based on the baseline code branch.

In embodiments of this application, the baseline code branch is equivalent to main storage space used for development of the project. What is stored in the baseline code branch is a code file that has been developed for the project before the requirement is proposed this time. A code branch is created based on the baseline code branch, so that a code file of a to-be-developed function may be stored in storage space provided by the code branch.

Based on this, during multi-person collaborative development, mutual interference between different developers can be prevented, and experience and efficiency of collaborative development can be improved.

According to the foregoing technical solution, the requirement management node automatically triggers a next phase of the development process based on the requirement information and according to an indication of the process information. This implements cross-service process coordination, and improves efficiency of project development. In addition, processes are closely linked to each other, so that information tracing is ensured, and reliability of the project is improved.

In a possible implementation, the IDE instance is a cloud IDE instance running on the cloud platform; and the IDE management node is configured to:
in response to the instance creation instruction, create, based on environment configuration information of the project, a cloud IDE instance corresponding to the project. The environment configuration information indicates a computing resource and a storage resource that are required by the project.

In some embodiments, the environment configuration information includes an operating system, a development language, a third-party library, and the like that are used for development of the project. In some embodiments, the cloud IDE instance is a virtual container used to run the project.

Through the foregoing process, the computing resource and the storage resource are allocated on demand, so that resource utilization can be improved on the basis of ensuring that the IDE instance is sufficient to provide a development environment required by the project.

In a possible implementation, the IDE instance is a local IDE instance running on a target terminal; and the IDE management node is configured to:
in response to the instance creation instruction, create, in the target terminal based on environment configuration information of the project, a local IDE instance corresponding to the project. The environment configuration information indicates a computing resource and a storage resource that are required by the project.

In some embodiments, the target terminal is a terminal used by a developer. An IDE plug-in associated with the cloud service-based project development system is installed and runs in the target terminal. The IDE management node may create the local IDE instance in the target terminal based on the environment configuration information by using the IDE plug-in.

In a local development mode, the local IDE instance is created, so that real-time communication payload for file upload and download on a cloud can be reduced, and project development is performed based on a reliable local environment. This improves flexibility and applicability of the project development method provided in this application in different application scenarios.

In a possible implementation, the requirement information further includes test information, and the test information indicates a function testing path of the project; and the IDE management node is further configured to:
obtain, in response to a submission operation for a code file in the IDE instance, the code file submitted in the IDE instance, and perform function testing on the submitted code file based on the function testing path.

Through the foregoing process, a test phase in the cloud project development process is improved, so that reliability of function testing can be improved, and reliability of the project can be further improved.

In a possible implementation, the system further includes a test node, and the requirement of the project includes a to-be-resolved problem of the project; and the requirement management node is further configured to:
send a test script creation instruction to the test node based on the requirement information. The test script creation instruction instructs to create a test script file of the project, and the test script file is used to test whether a code file of the project resolves the to-be-resolved problem.

The test node is configured to: obtain, in response to a submission operation for a code file in the IDE instance, the code file submitted in the IDE instance, and perform function testing on the submitted code file based on the test script file corresponding to the project.

In some embodiments, the test script includes a series of test instructions related to execution of a test task, and these instructions may be executed by an automatic testing tool to automatically execute a test case. The test case is a description of the test task, is a set of standards input and output when testing a code function, and is equivalent to providing a reference standard for checking whether the requirement of the project is met.

The foregoing technical solution provides a plurality of complete function testing processes based on the cloud service, thereby improving integrity of the project development process implemented on the cloud and flexibility and applicability in a plurality of scenarios.

In a possible implementation, the requirement management node is further configured to:
when the function testing is passed, send a code merging instruction to the code hosting node. The code merging instruction instructs to merge the code branch into the baseline code branch corresponding to the project, and the baseline code branch is used to store the code file of the developed function of the project.

The code hosting node is further configured to: in response to the code merging instruction, merge, based on the requirement information, the code file submitted in the code branch into the code file that is of the developed function of the project and that is stored in the baseline code branch.

Through the foregoing process, the code branch is merged based on the requirement information to implement reliable information tracing, ensure that each phase of the project development process is carried out around the requirement information, and improve standardization and reliability of project development.

According to a second aspect, this application provides a cloud service-based project development method, applied to the cloud service-based project development system provided in the first aspect. The system includes a requirement management node, a code hosting node, and an integrated development environment IDE management node. The method includes:
The requirement management node obtains requirement information for a project, sends a branch creation instruction to the code hosting node based on the requirement information, and sends an instance creation instruction to the IDE management node, where the requirement information is used to describe a requirement and a process of the project;
the code hosting node creates, in response to the branch creation instruction, a code branch corresponding to the project, where the code branch is used to store a code file of a to-be-developed function of the project; and
the IDE management node creates, in response to the instance creation instruction, an IDE instance corresponding to the project, and obtains and runs the code file from the code branch of the code hosting node based on the IDE instance.

In a possible implementation, the requirement information includes requirement description information and process information, the requirement description information indicates a function to be implemented by developing the project, and the process information indicates a code repository related to development of the project; and obtaining the requirement information for the project includes:
obtaining the requirement description information, and sending the requirement description information to a terminal used by a developer corresponding to the project; and
in response to a confirmation operation of the developer for the requirement description information, obtaining the process information submitted by the developer.

In a possible implementation, the requirement information includes the process information, and the process information indicates the code repository related to development of the project.

Creating, in response to the branch creation instruction, the code branch corresponding to the project includes:
in response to the branch creation instruction, checking out a baseline code branch corresponding to the project from the code repository, where the baseline code branch is used to store a code file of a developed function of the project; and
creating the code branch based on the baseline code branch.

In a possible implementation, the IDE instance is a cloud IDE instance running on a cloud platform; and creating, in response to the instance creation instruction, the IDE instance corresponding to the project includes:
in response to the instance creation instruction, creating, based on environment configuration information of the project, a cloud IDE instance corresponding to the project. The environment configuration information indicates a computing resource and a storage resource that are required by the project.

In a possible implementation, the IDE instance is a local IDE instance running on a target terminal; and creating, in response to the instance creation instruction, the IDE instance corresponding to the project includes:
in response to the instance creation instruction, creating, in the target terminal based on environment configuration information of the project, a local IDE instance corresponding to the project. The environment configuration information indicates a computing resource and a storage resource that are required by the project.

In a possible implementation, the requirement information further includes test information, and the test information indicates a function testing path of the project; and the method further includes:
The IDE management node obtains, in response to a submission operation for a code file in the IDE instance, the code file submitted in the IDE instance, and performs function testing on the submitted code file based on the function testing path.

In a possible implementation, the system further includes a test node, and the requirement of the project includes a to-be-resolved problem of the project; and the method further includes:
The requirement management node sends a test script creation instruction to the test node based on the requirement information, where the test script creation instruction instructs to create a test script file of the project, and the test script file is used to test whether a code file of the project resolves the to-be-resolved problem; and
the test node obtains, in response to a submission operation for a code file in the IDE instance, the code file submitted in the IDE instance, and performs function testing on the submitted code file based on the test script file corresponding to the project.

In a possible implementation, the method further includes:
When the function testing is passed, the requirement management node sends a code merging instruction to the code hosting node, where the code merging instruction instructs to merge the code branch into the baseline code branch corresponding to the project, and the baseline code branch is used to store the code file of the developed function of the project; and
in response to the code merging instruction, the code hosting node merges, based on the requirement information, the code file submitted in the code branch into the code file that is of the developed function of the project and that is stored in the baseline code branch.

According to a third aspect, a computing device cluster is provided, including at least one computing device. Each computing device includes a processor and a memory. The processor of the at least one computing device is configured to execute instructions stored in the memory of the at least one computing device, so that the computing device cluster performs the cloud service-based project development method according to the second aspect or any one of possible implementations of the second aspect.

According to a fourth aspect, a computer-readable storage medium is provided. The computer-readable storage medium is configured to store at least one segment of program code. When the at least one segment of program code is run by a computing device, the computing device is enabled to perform the cloud service-based project development method according to the second aspect or any one of possible implementations of the second aspect. The storage medium includes but is not limited to a volatile memory such as a random access memory, or a non-volatile memory such as a flash memory, a hard disk drive (hard disk drive, HDD) or a solid state drive (solid state drive, SSD).

According to a fifth aspect, a computer program product is provided. When the computer program product runs on a computing device, the computing device is enabled to perform the cloud service-based project development method according to the second aspect or any one of possible implementations of the second aspect. The computer program product may be a software installation package. When a function of the computing device needs to be implemented, the computer program product may be downloaded, and the computer program product may be executed on the computing device.

### BRIEF DESCRIPTION OF DRAWINGS

FIG. 1 is a diagram of an implementation environment of a cloud service-based project development method according to an embodiment of this application;
FIG. 2 is a flowchart of a cloud service-based project development method according to an embodiment of this application;
FIG. 3 is a diagram of a principle of a cloud service-based project development method according to an embodiment of this application;
FIG. 4 is a diagram of a cloud service-based project development system according to an embodiment of this application;
FIG. 5 is a flowchart of a cloud service-based project development method according to an embodiment of this application;
FIG. 6 is a diagram of a structure of a cloud service-based project development system according to an embodiment of this application;
FIG. 7 is a diagram of a hardware structure of a computing device according to an embodiment of this application;
FIG. 8 is a diagram of a structure of a computing device cluster according to an embodiment of this application; and
FIG. 9 is a diagram of a connection manner of a computing device cluster according to an embodiment of this application.

### DESCRIPTION OF EMBODIMENTS

To make the objectives, technical solutions, and advantages of this application clearer, the following further describes the implementations of this application in detail with reference to the accompanying drawings.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, a code file, a project, and a code repository in this application are all obtained under full authorization.

The following describes an implementation environment in this application.

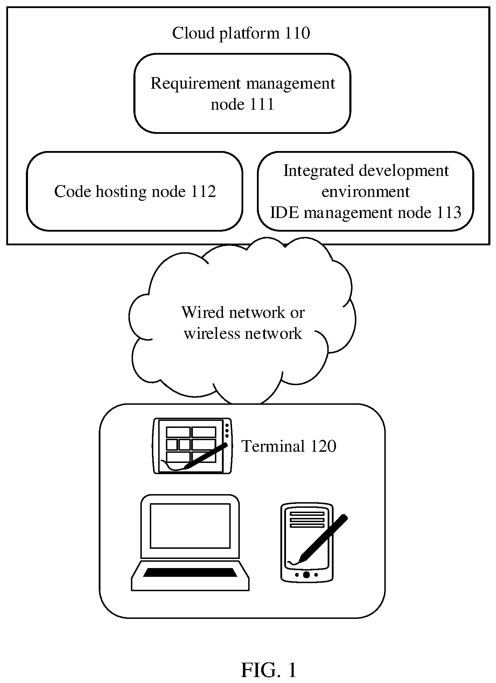

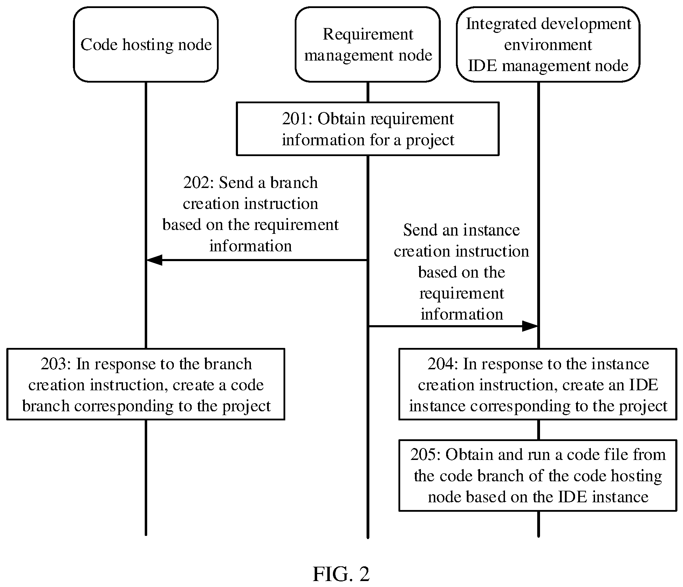

FIG. 1 is a diagram of an implementation environment of a cloud service-based project development method according to an embodiment of this application. As shown in FIG. 2, the implementation environment includes a cloud platform 110 and a terminal 120. The terminal 120 may be directly or indirectly connected to the cloud platform 110 through a wireless network or a wired network.

The cloud platform 110 is configured to implement the cloud service-based project development system. The cloud platform 110 combines various hardware resources and software resources, and provides functions such as computing, network communication, and storage for a user in a form of various cloud services.

With reference to FIG. 1, a requirement management node 111 in the cloud platform 110 is configured to provide a requirement management service for a project development process. The requirement management service mainly includes associating and sorting work tasks that need to be completed during project development. The work task is, for example, a requirement, a task, a defect (problem), and a code vulnerability bug. Associating the work task is, for example, managing a relationship between a code file and a test case of a project.

With reference to FIG. 1, a code hosting node 112 in the cloud platform 110 is configured to provide a service related to a cloud code repository for project development. In some embodiments, the code repository is a distributed version control system (git) repository, the git repository manages code files of a plurality of versions of the project in a form of code branches, and the git repository can record a change history of the project. In some other embodiments, the code hosting node manages the code repository based on an SVN version control system (subversion). This is not limited in this application. In some embodiments, functions of the code hosting node include code version control, code cloning, download, submission, code architecture check, code coding problem check, branch merging, code review, and the like. A plurality of developers of the project can use the code hosting node to collaborate with each other across regions and develop the project concurrently in a plurality of branches.

With reference to FIG. 1, an IDE management node 113 in the cloud platform 110 is configured to provide a cloud integrated development environment IDE for project development. The IDE is configured to provide applications used in a project development environment, usually including tools such as a code editor, a compiler, a debugger, and a graphical user interface. The IDE is equivalent to a development suite that integrates a code writing function, an analysis function, a compilation function, a debugging function, and the like. In some embodiments, the user may access the IDE management node by using a browser (in a web manner), to obtain the cloud IDE for project development. The cloud integrated development environment is usually provided for the user on demand in a form of an IDE instance. The user can perform operations in the cloud IDE instance, for example, code writing, compilation and debugging, running and preview, code repository access, and command line execution. In some embodiments, the IDE instance is a computing instance, and the computing instance may be at least one of a physical host (a computing device), a virtual machine, and a container.

The terminal 120 is a terminal used by the user who performs project development, and the terminal 120 can communicate with the cloud platform 110, to perform project development by using the cloud service provided by the cloud platform 110. The terminal 120 may be at least one of a smartphone, a desktop computer, an augmented reality terminal, a tablet computer, an e-book reader, and a laptop portable computer. An application that supports access to the cloud platform is installed and runs on the terminal 120. The application may be a client, a browser, or the like. This is not limited herein. For example, if the application is a client, a related person 1 (for example, a requirement party) can access the requirement management node by using a browser, to input requirement information of the project, and a related person 2 (for example, a developer) can provide a client to access the IDE management node, to perform project development in the IDE instance. For example, the terminal 120 is a terminal used by the user, and an application running on the terminal 120 is logged in by using a user account, which is also referred to as an object. In some embodiments, the requirement management node, the code hosting node, and the IDE management node can be provided to the user in a form of a same application or in a form of different applications. This is not limited in this application.

In some embodiments, the cloud platform 110 is implemented based on a computing device cluster. The computing device cluster includes at least one computing device. The computing device cluster may be an independent physical server, or may be a server cluster or a distributed file system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform. In some embodiments, an example in which the cloud platform is implemented based on the cloud server is used. The cloud server is a service based on a hardware resource and a software resource, and provides computing, network, and storage capabilities. A network "cloud" is used to remotely process and analyze massive data and return the data to the user, and the cloud server features a large scale, distribution, virtualization, high availability, scalability, on-demand services, and security. The cloud server can implement rapid provisioning and release of configurable computing resources at low management costs or with low complexity of interaction between the user and a service provider.

In embodiments of this application, the requirement management node is configured to: obtain requirement information for a project, send a branch creation instruction to the code hosting node based on the requirement information, and send an instance creation instruction to the IDE management node, where the requirement information is used to describe a requirement and a process of the project; the code hosting node is configured to create, in response to the branch creation instruction, a code branch corresponding to the project, where the code branch is used to store a code file of a to-be-developed function of the project; and the IDE management node is configured to: create, in response to the instance creation instruction, an IDE instance corresponding to the project, and obtain and run the code file from the code branch of the code hosting node based on the IDE instance.

The foregoing technical solution provides a cross-service project development mode, in which the requirement information of the project is used to associate each process phase in a project development process in a standard manner. This greatly reduces user's operations required in a plurality of service nodes, effectively implements cross-service process coordination and information tracing, and effectively improves efficiency of project development.

In some embodiments, in a process of project development based on the cloud service provided by the cloud platform, the cloud platform 110 and the terminal 120 may cooperate with each other. For example, the terminal 120 obtains the requirement information input by the user, and sends the requirement information to the requirement management node 111 of the cloud platform 110 for storage. For another example, in response to a submission operation performed by the user on a code editing interface provided by the IDE management node 113, the terminal 120 triggers the IDE management node 113 to obtain a code file and the like submitted in the IDE instance. A related process is described in a subsequent embodiment, and details are not described herein again.

It should be noted that the terminal 120 may be generally one of a plurality of terminals or a set including a plurality of terminals. The requirement management node, the code hosting node, and the IDE management node in the cloud platform 110 may include at least one server, and the requirement management node, the code hosting node, and the IDE management node may include at least one server that is the same or different. A quantity of devices of each type and a device type in the implementation environment are not limited in embodiments of this application.

In some embodiments, the wireless network or the wired network uses a standard communication technology and/or protocol. The network includes but is not limited to any combination of a data center network (data center network), a storage area network (storage area network, SAN), a local area network (local area network, LAN), a metropolitan area network (metropolitan area network, MAN), a wide area network (wide area network, WAN), a mobile, wired, or wireless network, a private network, or a virtual private network. In some implementations, technologies and/or formats including a hypertext markup language (hypertext markup language, HTML), an extensible markup language (extensible markup language, XML), and the like are used to represent data exchanged through the network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can alternatively be used to replace or supplement the foregoing data communication technology.

The following describes a cloud service-based project development method in this application.

FIG. 2 is a flowchart of a cloud service-based project development method according to an embodiment of this application. As shown in FIG. 2, the cloud service-based project development method is applied to the cloud service-based project development system provided in the implementation environment shown in FIG. 1, and may be executed by a cloud platform. For example, the method includes the following steps 201 to 205.

201: A requirement management node obtains requirement information for a project, where the requirement information is used to describe a requirement and a process of the project.

In this embodiment of this application, the project is a software project. The project is equivalent to a program set including a plurality of program code fragments based on a specific system plan, and the plurality of program code fragments may be respectively used to implement a plurality of corresponding functions.

In this embodiment of this application, the requirement of the project includes a to-be-implemented function of the project. For example, the project is an e-commerce project. A requirement that the project needs to meet may include functions such as commodity information display and order generation and delivery. A development process of the e-commerce project may include: writing program code fragments corresponding to the functions such as commodity information display and order generation and delivery, and performing planning and testing based on the program code fragment corresponding to each function, to form an application that can provide an e-commerce service.

In some other embodiments, the requirement of the project includes a to-be-resolved problem, for example, a vulnerability proposed by a tester in a code running process or a problem fed back by a user in a use process.

In some embodiments, the requirement information includes requirement description information and process information. In some embodiments, the requirement description information indicates a function to be implemented by developing the project. For example, if the project is an academic affairs database system, the requirement description information may indicate an academic affairs information query function, an academic affairs information entry function, and the like that are to be implemented by the academic affairs data system. In some other embodiments, the requirement description information indicates a feature of the project when a function is implemented, for example, an access volume that can be carried per unit time and a volume of data that can be stored. In some other embodiments, the requirement description information further includes object information. The object information indicates a developer corresponding to the project, or may indicate a developer or a tester who handles a requirement or problem proposed this time. In some embodiments, the object information may be an account of the developer, an object number, or the like. This is not limited in this application.

In some embodiments, the process information indicates process steps related to development of the project. For example, for a process step of creating a code branch, the process information indicates a code repository related to development of the project. For example, the process information may include a network address of a code repository associated with the project, a baseline code branch that is associated with the project and that is in the code repository, and a development branch that is associated with the project and that is in the code repository.

In some embodiments, the requirement information further includes test information, and the test information indicates a function testing path of the project. In some embodiments, the test information further indicates a testing mode of the project. For example, the testing mode may be unit testing, automatic testing, or manual testing. When the test information indicates that the testing mode is unit testing, the function testing path indicates a storage path of a unit testing code file of the project. When the test information indicates that the testing mode is automatic testing or manual testing, the function testing path indicates an identifier of a test case used by the project, or the function testing path indicates a storage path of a test case used by the project.

In some embodiments, the requirement management node records the requirement information of the project in a form of a requirement order. The requirement order includes a plurality of fields, and each field is used to record one piece of information related to the requirement and the process of the project. For example, the requirement description information includes an identifier field, a type field, and a requirement description field. The identifier field is used to record a number of a requirement proposed this time. For example, R1 indicates a requirement 1, and Q2 indicates a problem 2. The type field is used to record a type of the requirement proposed this time. For example, a field value 1 indicates a to-be-implemented function proposed this time, and a field value 0 indicates a to-be-resolved problem proposed this time. The process information includes a code repository field, and the code repository field is used to record the network address of the code repository associated with the project. In some embodiments, the code repository field is further used to record, in a form of a directory, the baseline code branch that is associated with the project and that is in the code repository, and the like. This is not limited in this application. The test information includes a test type field and a test path field. The test type field is used to record the testing mode of the project, and the test path field is used to record the function testing path of the project.

In some embodiments, if the requirement information indicates that the problem proposed this time is a to-be-resolved problem, the requirement order may be referred to as a trouble ticket. This is not limited in this application.

In some embodiments, a development process of the project includes phases such as requirement proposal, code writing, and function testing. Accordingly, the development process of the project relates to roles such as a requirement party and a developer. For example, the requirement party may propose the requirement of the project and plan the development process of the project by accessing the requirement management node; and the developer of the project may perform code writing, debugging, function testing, and the like based on a code hosting node and an IDE management node. The tester of the project may propose the to-be-resolved problem of the project in the requirement management node.

In some embodiments, the requirement management node obtains the requirement information of the project from a plurality of roles. In this example, step 201 includes the following steps 2011 and 2012.

Step 2011: The requirement management node obtains the requirement description information, and sends the requirement description information to a terminal used by a developer corresponding to the project.

In some embodiments, the requirement management node can obtain the requirement description information of the project from a terminal used by a related person who proposes the requirement. For example, the related person may be a developer of the project, a requirement party, a tester, or the like. This is not limited in this application. In some embodiments, the requirement description information includes a developer assigned to the project. For example, the developer accesses the requirement management node by using an account for logging in to an application. The requirement management node sends, based on an account assigned in the requirement description information, the requirement description information to a terminal logged in with the account (namely, the terminal used by the developer).

Step 2012: In response to a confirmation operation of the developer for the requirement description information, the requirement management node obtains the process information submitted by the developer.

In some embodiments, the terminal used by the developer displays the requirement description information, and sends the obtained process information to the requirement management node when the confirmation operation is detected.

In some other embodiments, in response to the confirmation operation of the developer for the requirement description information, the requirement management node obtains the test information submitted by the developer, to assign a subsequent function testing task based on a test type indicated by the test information. For example, if the test type indicates unit testing, function testing may be directly performed by the developer; or if the test type is not unit testing, a tester is assigned to perform function testing.

In some other embodiments, if the terminal used by the developer detects a return operation on the requirement description information, a process phase goes back to the terminal used by a related person who proposes the requirement. In this example, the developer may consider that the requirement description information is incorrect, or the assigned developer is incorrect. Based on this, the process can quickly go back to a previous process phase, to feed back a process error in a standard manner.

According to the foregoing technical solution, a requirement information collection mechanism is provided with reference to roles of all parties in the project development process, so that a requirement can be delivered and information can be confirmed in a requirement information collection process, thereby implementing information tracing and a plurality of times of confirmation, and improving reliability of requirement information.

202: Based on the requirement information, the requirement management node sends a branch creation instruction to the code hosting node, and sends an instance creation instruction to the IDE management node.

In some embodiments, the requirement management node includes, in the branch creation instruction based on the process information included in the requirement information, a network address of the code repository related to the project, to instruct the code hosting node to perform branch creation based on the network address.

In some embodiments, after sending the branch creation instruction to the code hosting node, the requirement management node sends, in response to a development start instruction returned by the terminal used by the developer, the instance creation instruction to the IDE management node based on the requirement information. In some embodiments, the requirement management node includes environment configuration information in the instance creation instruction. The environment configuration information indicates a computing resource and a storage resource that are required by the project. Based on this, the IDE management node can create an IDE instance according to a specification of a development environment required for running the project.

According to the foregoing technical solution, the requirement management node automatically triggers a next phase of the development process based on the requirement information and according to an indication of the process information. This implements cross-service process coordination, and improves efficiency of project development. In addition, processes are closely linked to each other, so that information tracing is ensured, and reliability of the project is improved.

203: The code hosting node creates, in response to the branch creation instruction, a code branch corresponding to the project, where the code branch is used to store a code file of a to-be-developed function of the project.

In some embodiments, the requirement information includes the process information, and the process information indicates the code repository related to development of the project. The code hosting node may implement step 203 by performing the following steps 2031 and 2032.

Step 2031: The code hosting node checks out, in response to the branch creation instruction, a baseline code branch corresponding to the project from the code repository, where the baseline code branch is used to store a code file of a developed function of the project.

In some embodiments, the code repository can provide storage space for a code file of the project, and can also perform version control on the code file of the project.

In embodiments of this application, the baseline code branch is equivalent to main storage space used for development of the project. What is stored in the baseline code branch is a code file that has been developed for the project before the requirement is proposed this time. To ensure that a development process for the requirement proposed this time does not affect normal use of a developed function, a code branch is usually created based on the baseline code branch, so that a code file of a to-be-developed function may be stored in storage space provided by the code branch.

In some embodiments, a process of checking out the baseline code branch is equivalent to locating, in the code repository, a development progress corresponding to the code file that has been developed for the project, to ensure that the development process for this requirement is carried out based on a latest version. In a case of multi-person collaborative development, a probability of a version conflict can be reduced.

Step 2032: The code hosting node creates the code branch based on the baseline code branch.

In some embodiments, the code hosting node manages the code branch in the code repository based on an SVN version control system. In this example, the baseline code branch is a main branch created by the code repository by default during initialization. The main branch is equivalent to a root directory of the code file of the project. Each time a new function is developed or a new version of the project is iterated, a code branch can be created under the main branch, to store and manage the new code in a subdirectory that does not affect the main branch. In some other embodiments, the code hosting node manages the code branch in the code repository based on git. In this example, the baseline code branch is a target branch used by the code repository for developing the project. The code branch created for the project is an independent workspace different from the target branch. A current branch is switched to the code branch, so that project development can be performed in the code branch. Based on this, during multi-person collaborative development, mutual interference between different developers can be prevented, and experience and efficiency of collaborative development can be improved.

204: The IDE management node creates, in response to the instance creation instruction, the IDE instance corresponding to the project.

In some embodiments, for different user development habits, a process of creating the IDE instance by the IDE management node may include the following two cases.

Case 1: A user adopts a cloud development mode, and the IDE instance is a cloud IDE instance running on the cloud platform.

In this case, in response to the instance creation instruction, the IDE management node creates, based on the environment configuration information of the project, a cloud IDE instance corresponding to the project. The environment configuration information indicates the computing resource and the storage resource that are required by the project.

In some embodiments, the environment configuration information includes an operating system, a development language, a third-party library, and the like that are used for development of the project. In some embodiments, the computing resource may include a ratio of a quantity of cores of a processor (central processing unit, CPU) used for running the project, and the storage resource may include a size of a memory allocated to the project.

In some embodiments, the cloud IDE instance is a virtual container used to run the project. The IDE management node may allocate, based on the environment configuration information, a proper computing resource and a proper storage resource to the virtual container used to run the project, for example, a ratio of a quantity of cores of a processor of an operating system in a container and a limit of a running memory of the operating system in the container. The IDE management node may further obtain, based on the environment configuration information, a resource such as a dependency package required for running the project from a corresponding third-party library. In this way, the dependency package can be loaded to the virtual container before project development starts, thereby improving efficiency of project development.

Case 2: A user adopts a local development mode, and the IDE instance is a local IDE instance running on a target terminal.

In this case, in response to the instance creation instruction, the IDE management node creates, in the target terminal based on the environment configuration information of the project, a local IDE instance corresponding to the project. The environment configuration information indicates the computing resource and the storage resource that are required by the project.

In some embodiments, the target terminal is a terminal used by a developer. When the user adopts the local development mode, an IDE plug-in associated with the cloud service-based project development system is installed and runs in the target terminal. The IDE management node may create the local IDE instance in the target terminal based on the environment configuration information by using the IDE plug-in. For a creation principle, refer to Case 1. Details are not described herein again.

In the local development mode, the local IDE instance is created, so that real-time communication payload for file upload and download on a cloud can be reduced, and project development is performed based on a reliable local environment. This improves flexibility and applicability of the project development method provided in this application in different application scenarios.

Through the foregoing process, the computing resource and the storage resource are allocated on demand, so that resource utilization can be improved on the basis of ensuring that the IDE instance is sufficient to provide a development environment required by the project.

205: The IDE management node obtains and runs the code file from the code branch of the code hosting node based on the IDE instance.

In some embodiments, after creating the IDE instance, the IDE management node automatically downloads the code file in the code branch from the code hosting node to the IDE instance. The code file is a basis for the developer to perform code writing and debugging for this requirement.

In some other embodiments, if the user adopts the local development mode, the code file may be automatically downloaded from the code branch by using the IDE plug-in after the local IDE instance is created.

In embodiments of this application, the developer may perform development operations such as code editing, compilation, and debugging based on the code file in the IDE instance.

In some embodiments, after step 205 is performed, the IDE management node can perform function testing on the code file developed by the user, to verify whether the developed code file meets the requirement.

In some embodiments, the requirement information includes the test information, and the test information indicates the function testing path of the project. In some embodiments, the test information indicates a test type of the project. When the test type is unit testing, the IDE management node obtains, in response to a submission operation for a code file in the IDE instance, the code file submitted in the IDE instance, and reads and runs a code file of unit testing based on a storage path of a unit testing code file indicated by the function testing path, to perform function testing on the submitted code file.

In some embodiments, unit testing is completed by the developer and does not require participation of the tester. After the developer submits the code file to confirm that development is completed, the IDE management node automatically obtains the unit testing code file, and compiles the code file submitted in the code branch. If compilation succeeds and unit testing is completed, it is determined that the submitted code file passes function testing, that is, the code file obtained through development meets the requirement proposed this time.

Through the foregoing process, a test phase in the cloud project development process is improved, so that reliability of function testing can be improved, and reliability of the project can be further improved.

In some embodiments, when the function testing is passed, a process of merging code branches is triggered. The process may be implemented by performing the following steps A and B.

Step A: When the function testing is passed, the requirement management node sends a code merging instruction to the code hosting node, where the code merging instruction instructs to merge the code branch into the baseline code branch corresponding to the project, and the baseline code branch is used to store the code file of the developed function of the project.

In some embodiments, if the function testing is passed, it is considered that the requirement proposed this time has been met (or the problem has been resolved). Therefore, the requirement management node sends the code merging instruction to the code hosting node, to instruct to merge the verified code file in the code branch into the baseline code branch of the project, and save a current project development progress in a timely time.

In some other embodiments, if the function testing fails, the requirement management node may return a testing failure message to the terminal used by the developer, to indicate the developer to continue development and submit the code file. In some embodiments, the requirement management node may send a reason why compilation fails or a reason why unit testing fails to the terminal used by the developer, to feed back a development error, thereby improving efficiency of project development.

Step B: In response to the code merging instruction, the code hosting node merges, based on the requirement information, the code file submitted in the code branch into the code file that is of the developed function of the project and that is stored in the baseline code branch.

In some embodiments, a process of merging the code file in the code branch into the baseline code branch includes: switching the current branch to the baseline code branch, and submitting the code file in the code branch to the current branch. Based on this, the code file that passes the function testing and that is in the code branch can be synchronized to the main branch of the project.

In some embodiments, in response to the code merging instruction, the code hosting node automatically uses the requirement information as submission information to merge the code branch, to implement reliable information tracing. This ensures that each phase of the project development process is carried out around the requirement information, and improves standardization and reliability of project development.

In some embodiments, if a conflict occurs in a branch merging process, the code hosting node feeds back conflict information to the terminal used by the developer, to indicate the developer to resolve the conflict, performs function testing again according to the provided function testing method, and continues to perform branch merging when the function testing is passed again. The conflict information may indicate that a plurality of parallel code branches need to be merged for functions corresponding to a same requirement. Based on the foregoing process, the version conflict in the multi-person collaborative development mode can be avoided.

In some embodiments, after the code branch is merged, the code hosting node deletes the code branch, and the project development process for the requirement proposed this time ends. The code branch that is no longer used is automatically deleted, so that resource utilization can be improved.

The foregoing technical solution provides a cross-service project development mode, in which the requirement information of the project is used to associate each process phase in a project development process in a standard manner. This greatly reduces user's operations required in a plurality of service nodes, effectively implements cross-service process coordination and information tracing, and effectively improves efficiency of project development.

Further, a requirement can be delivered and information can be confirmed in a requirement information collection process, thereby implementing information tracing and a plurality of times of confirmation, and improving credibility of the project. This not only implements cross-service process coordination, but also improves efficiency of project development. In addition, processes are closely linked to each other around the requirement information, so that information tracing is ensured, and standardization and reliability of project development are improved.

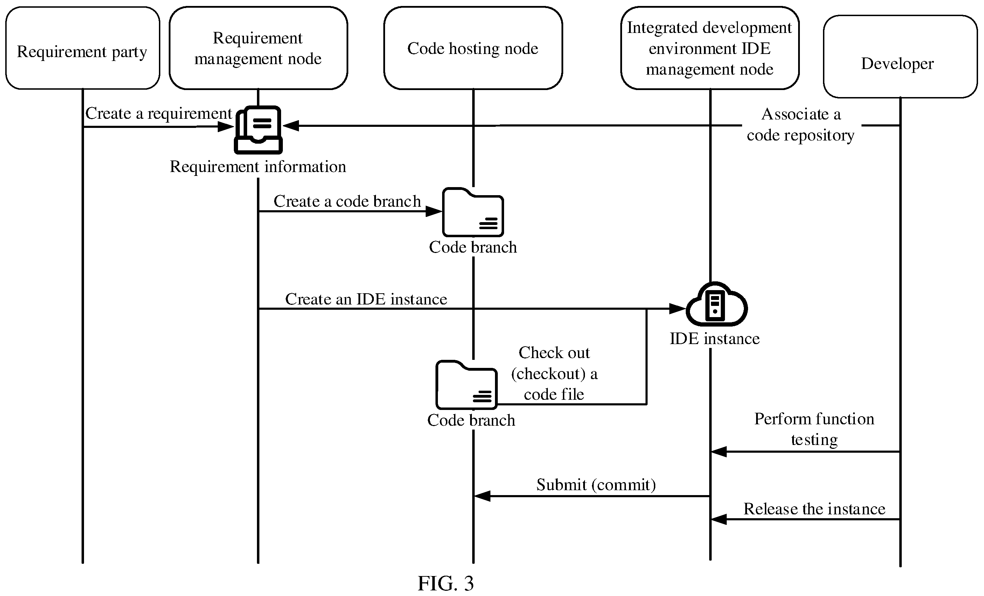

An embodiment of this application provides a principle of a cloud service-based project development method. With reference to FIG. 3, a requirement party can input requirement information in a requirement management node, to create a requirement for a project; a developer associates a code repository related to the project in the requirement information by using the requirement management node; and the requirement management node indicates a code hosting node to create a code branch based on the requirement information, and indicates an IDE management node to create an IDE instance and check out (checkout) a code file in the code branch to the IDE instance for running. When the developer performs function testing and the function testing is passed, the code file that passes the function testing is submitted (commit), and the IDE instance or a test instance occupied by the project is released, to complete a project development process of this requirement.

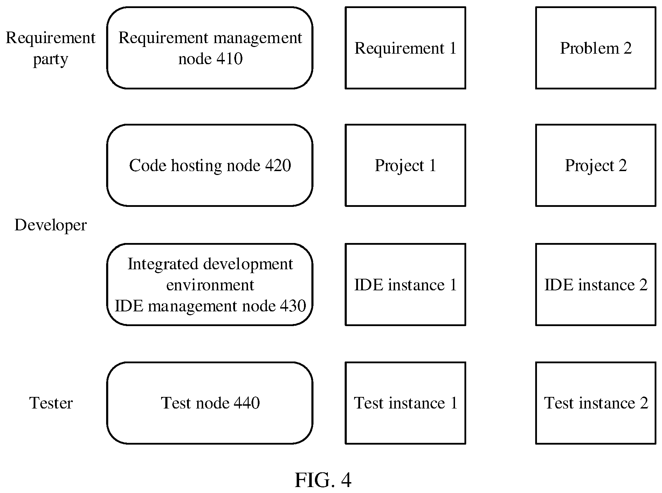

Based on the foregoing embodiments corresponding to FIG. 1 to FIG. 3, the following provides another cloud service-based project development system. FIG. 4 is a diagram of a cloud service-based project development system according to an embodiment of this application. The system includes a requirement management node 410, a code hosting node 420, an IDE management node 430, and a test node 440.

For descriptions of the requirement management node 410, the code hosting node 420, and the IDE management node 430, respectively refer to the descriptions of the requirement management node 111, the code hosting node 112, and the IDE management node 113 in the content corresponding to FIG. 1. Details are not described herein again.

In this embodiment of this application, the test node 440 is configured to provide a service related to code testing. For example, the test node 440 is configured to manage a test case, a test script (test script), a cloud test instance, and the like of a project. The test case is a description of a test task, is a set of standards input and output when testing a code function, and is equivalent to providing a reference standard for checking whether a requirement of the project is met. The test script includes a series of test instructions related to execution of a test task, and these instructions may be executed by an automatic testing tool to automatically execute a test case. The cloud test instance is used to provide a running environment for execution of a test case, and the cloud test instance may be at least one of a physical host (a computing device), a virtual machine, and a container.

In this embodiment of this application, requirement information obtained by the requirement management node includes a to-be-resolved problem of the project. In this example, when the requirement information can be obtained, the requirement management node 410 sends a test script creation instruction to the test node 440 based on the requirement information. The test script creation instruction instructs to create a test script file of the project, and the test script file is used to test whether a code file of the project resolves the to-be-resolved problem.

Based on this, the test node 440 can obtain, in response to a submission operation for a code file in an IDE instance corresponding to the project in the IDE management node, the code file submitted in the IDE instance, and perform function testing on the submitted code file based on the test script file corresponding to the project.

In some embodiments, the cloud service-based project development system provided in this application may further provide more other cloud services, for example, code compilation and building, pipeline release, and binary hosting. This is not limited in this application.

With reference to FIG. 4, a requirement party, a developer, and a tester may access any node in the cloud service-based project development system by using a terminal, to use a corresponding cloud service. For example, the requirement party may access the requirement management node 410 and input requirement information to create a "requirement 1" and a "problem 2" corresponding to a project. The "requirement 1" describes a to-be-developed function of the project, and the "problem 2" describes a to-be-resolved problem of the project. The requirement management node 410 indicates, based on the requirement information, the code hosting node 420 to create a code branch "project 1" corresponding to the "requirement 1" and a code branch "project 2" corresponding to the "problem 2". The requirement management node 410 indicates, based on the requirement information, the IDE management node 430 to create an IDE instance "IDE instance 1" corresponding to the "requirement 1" and an IDE instance "IDE instance 2" corresponding to the "problem 2". The requirement management node 410 indicates, based on the requirement information, the test node 440 to create a test instance "test instance 1" corresponding to the "requirement 1" and a test instance "test instance 2" corresponding to the "problem 2".

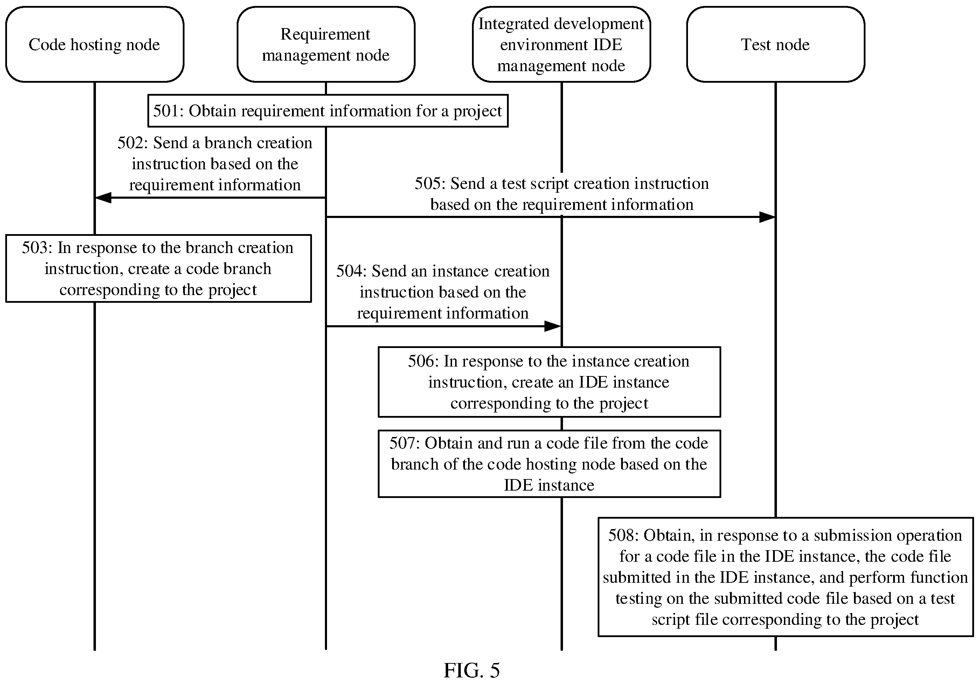

The following further describes the technical solutions of this application based on the cloud service-based project development system provided in FIG. 4. FIG. 5 is a flowchart of a cloud service-based project development method according to an embodiment of this application. As shown in FIG. 5, the cloud service-based project development method is applied to the cloud service-based project development system shown in FIG. 4. The method includes the following steps 501 to 508.

501: A requirement management node obtains requirement information for a project, where the requirement information is used to describe a requirement and a process of the project, the requirement information includes requirement description information and process information, the requirement description information indicates a function to be implemented by developing the project, the process information indicates a code repository related to development of the project, and the requirement of the project includes a to-be-resolved problem of the project.

For step 501, refer to step 201. Details are not described herein again.

In this embodiment of this application, the requirement of the project includes the to-be-resolved problem, for example, a vulnerability proposed by a tester in a code running process or a problem fed back by a user in a use process. In some embodiments, the to-be-resolved problem of the project is submitted by the tester to the requirement management node in a form of a trouble ticket.

In some embodiments, the tester finds a problem existing in the project, adds a trouble ticket for the project to the requirement management node, inputs problem-related information in requirement description information of the trouble ticket, and assigns a developer responsible for resolving the problem. In some embodiments, the assigned developer is set by default to a tester who creates the trouble ticket.

502: The requirement management node sends a branch creation instruction to a code hosting node based on the requirement information.

For step 502, refer to step 202. Details are not described herein again.

503: The code hosting node creates, in response to the branch creation instruction, a code branch corresponding to the project, where the code branch is used to store a code file of a to-be-developed function of the project.

For step 503, refer to step 203. Details are not described herein again.

504: The requirement management node sends an instance creation instruction to an IDE management node based on the requirement information.

For step 504, refer to step 202. Details are not described herein again.

505: The requirement management node sends a test script creation instruction to a test node based on the requirement information, where the test script creation instruction instructs to create a test script file of the project, and the test script file is used to test whether a code file of the project resolves the to-be-resolved problem.

Step 505 may be performed after step 501 is performed.

In some embodiments, the test script file is created and edited by the tester in the test node based on the requirement information. In some other embodiments, the test script file may be obtained from a path specified by the tester. This is not limited in this application.

In some embodiments, the test script creation instruction is assigned, in a form of a test script creation task, to a target account used for logging in to the test node. The target account may be an account used by the tester who creates the trouble ticket to access the test node.

506: The IDE management node creates, in response to the instance creation instruction, an IDE instance corresponding to the project.

For step 506, refer to step 204. Details are not described herein again.

507: The IDE management node obtains and runs the code file from the code branch of the code hosting node based on the IDE instance.

For step 507, refer to step 205. Details are not described herein again.

508: The test node obtains, in response to a submission operation for a code file in the IDE instance, the code file submitted in the IDE instance, and performs function testing on the submitted code file based on the test script file corresponding to the project.

In some embodiments, performing function testing based on the test script file includes two modes: manual testing and automatic testing.

In some embodiments, in response to the submission operation, the test node assigns a test instance creation task to the tester, to indicate the tester to create a test instance for the project in the test node. Based on this, the test node may invoke the test instance to run the test script file to perform function testing. If the testing mode is manual testing, the tester needs to log in to the test node and manually trigger running of the test instance. If the testing mode is automatic testing, the test instance can automatically load and execute the test script file in the test node.

In some embodiments, after the function testing procedure is completed, the test instance is deleted to improve resource utilization.

In some embodiments, when the function testing is passed, a process of merging code branches is triggered. For the process, refer to the foregoing steps A and B. Details are not described herein again.

The foregoing technical solution provides a cross-service project development mode, in which the requirement information of the project is used to associate each process phase in a project development process in a standard manner. This greatly reduces user's operations required in a plurality of service nodes, effectively implements cross-service process coordination and information tracing, and effectively improves efficiency of project development.

Further, a requirement can be delivered and information can be confirmed in a requirement information collection process, thereby implementing information tracing and a plurality of times of confirmation, and improving credibility of the project. This not only implements cross-service process coordination, but also improves efficiency of project development. In addition, processes are closely linked to each other around the requirement information, so that information tracing is ensured, and standardization and reliability of project development are improved.

In addition, a plurality of complete function testing processes are provided based on the cloud service, thereby improving integrity of the project development process implemented on the cloud and flexibility and applicability in a plurality of scenarios. A created IDE instance and a test instance are released in a timely manner, so that resource utilization is effectively improved.

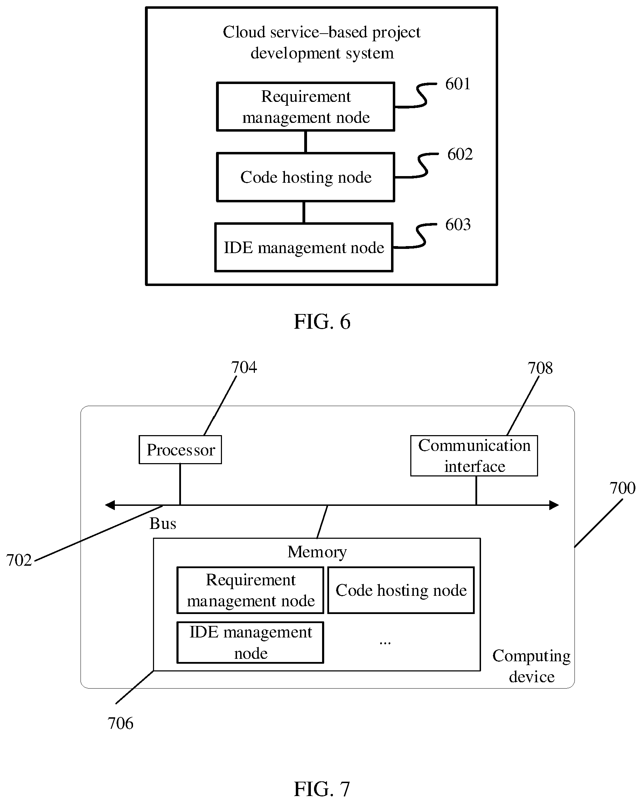

FIG. 6 is a diagram of a structure of a cloud service-based project development system according to an embodiment of this application. Each node in the cloud service-based project development system may implement the cloud service-based project development method by using software, hardware, or a combination of software and hardware. As shown in FIG. 6, the cloud service-based project development system includes a requirement management node 601, a code hosting node 602, and an integrated development environment IDE management node 603.

The requirement management node 601 is configured to: obtain requirement information for a project, send a branch creation instruction to the code hosting node based on the requirement information, and send an instance creation instruction to the IDE management node. The requirement information is used to describe a requirement and a process of the project.

The code hosting node 602 is configured to create, in response to the branch creation instruction, a code branch corresponding to the project. The code branch is used to store a code file of a to-be-developed function of the project.

The IDE management node 603 is configured to: create, in response to the instance creation instruction, an IDE instance corresponding to the project, and obtain and run the code file from the code branch of the code hosting node based on the IDE instance.

In a possible implementation, the requirement information includes requirement description information and process information, the requirement description information indicates a function to be implemented by developing the project, and the process information indicates a code repository related to development of the project; and the requirement management node 601 is configured to:
obtain the requirement description information, and send the requirement description information to a terminal used by a developer corresponding to the project; and
in response to a confirmation operation of the developer for the requirement description information, obtain the process information submitted by the developer.

In a possible implementation, the requirement information includes the process information, and the process information indicates the code repository related to development of the project; and the code hosting node 602 is configured to:
in response to the branch creation instruction, check out a baseline code branch corresponding to the project from the code repository, where the baseline code branch is used to store a code file of a developed function of the project; and
create the code branch based on the baseline code branch.

In a possible implementation, the IDE instance is a cloud IDE instance running on a cloud platform; and the IDE management node 603 is configured to:
in response to the instance creation instruction, create, based on environment configuration information of the project, a cloud IDE instance corresponding to the project. The environment configuration information indicates a computing resource and a storage resource that are required by the project.

In a possible implementation, the IDE instance is a local IDE instance running on a target terminal; and the IDE management node 603 is configured to:
in response to the instance creation instruction, create, in the target terminal based on environment configuration information of the project, a local IDE instance corresponding to the project. The environment configuration information indicates a computing resource and a storage resource that are required by the project.

In a possible implementation, the requirement information further includes test information, and the test information indicates a function testing path of the project; and the IDE management node 603 is further configured to:
obtain, in response to a submission operation for a code file in the IDE instance, the code file submitted in the IDE instance, and perform function testing on the submitted code file based on the function testing path.

In a possible implementation, the system further includes a test node, and the requirement of the project includes a to-be-resolved problem of the project; and the requirement management node 601 is further configured to: send a test script creation instruction to the test node based on the requirement information. The test script creation instruction instructs to create a test script file of the project, and the test script file is used to test whether a code file of the project resolves the to-be-resolved problem.

The test node is configured to: obtain, in response to a submission operation for a code file in the IDE instance, the code file submitted in the IDE instance, and perform function testing on the submitted code file based on the test script file corresponding to the project.

In a possible implementation, the requirement management node 601 is further configured to: when the function testing is passed, send a code merging instruction to the code hosting node. The code merging instruction instructs to merge the code branch into the baseline code branch corresponding to the project, and the baseline code branch is used to store the code file of the developed function of the project.

The code hosting node 602 is further configured to: in response to the code merging instruction, merge, based on the requirement information, the code file submitted in the code branch into the code file that is of the developed function of the project and that is stored in the baseline code branch.

The foregoing technical solution provides a cross-service project development mode, in which the requirement information of the project is used to associate each process phase in a project development process in a standard manner. This greatly reduces user's operations required in a plurality of service nodes, effectively implements cross-service process coordination and information tracing, and effectively improves efficiency of project development. Further, a requirement can be delivered and information can be confirmed in a requirement information collection process, thereby implementing information tracing and a plurality of times of confirmation, and improving credibility of the project. This not only implements cross-service process coordination, but also improves efficiency of project development. In addition, processes are closely linked to each other around the requirement information, so that information tracing is ensured, and standardization and reliability of project development are improved. In addition, a plurality of complete function testing processes are provided based on the cloud service, thereby improving integrity of the project development process implemented on the cloud and flexibility and applicability in a plurality of scenarios. A created IDE instance and a test instance are released in a timely manner, so that resource utilization is effectively improved.

In some embodiments, the requirement management node 601, the code hosting node 602, and the IDE management node 603 may all be implemented by using software or hardware. For example, the following uses the requirement management node 601 as an example to describe an implementation of the requirement management node 601. Similarly, for implementations of the code hosting node 602 and the IDE management node 603, refer to the implementation of the requirement management node 601.

The node is used as an example of a software functional unit, and the requirement management node 601 may include code run on a computing instance. The computing instance may include at least one of a physical host (a computing device), a virtual machine, and a container. Further, there may be one or more computing instances. For example, the requirement management node 601 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region (region). A communication gateway needs to be set in each VPC for communication between two VPCs in a same region and cross-region communication between VPCs in different regions. The VPCs are interconnected through the communication gateway.

The node is used as an example of a hardware functional unit, and the requirement management node 601 may include at least one computing device. Alternatively, the requirement management node 601 may be a device or the like implemented by using an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the requirement management node 601 may be distributed in a same region, or may be distributed in different regions. The plurality of computing devices included in the requirement management node 601 may be distributed in a same AZ, or may be distributed in different AZs. Similarly, the plurality of computing devices included in the requirement management node 601 may be distributed in a same VPC, or may be distributed in a plurality of VPCs. The plurality of computing devices may be any combination of computing devices such as a server, an ASIC, a PLD, a CPLD, an FPGA, or a GAL.

It should be noted that, in another embodiment, the requirement management node 601 may be configured to perform any step in the cloud service-based project development method. To be specific, steps that the requirement management node 601, the code hosting node 602 and the IDE management node 603 are responsible for implementing may be specified according to a requirement. The requirement management node 601, the code hosting node 602, and the IDE management node 603 respectively implement different steps in the cloud service-based project development method, to implement all functions of the cloud service-based project development system. In addition, the cloud service-based project development system provided in the foregoing embodiments and the cloud service-based project development method embodiment belong to a same concept. For a specific implementation process, refer to the method embodiment. Details are not described herein again.

This application further provides a computing device, which can be configured as a server included in the cloud platform in the foregoing implementation environment. FIG. 7 is a diagram of a hardware structure of a computing device according to an embodiment of this application. As shown in FIG. 7, the computing device 700 includes a bus 702, a processor 704, a memory 706, and a communication interface 708. The processor 704, the memory 706, and the communication interface 708 communicate with each other through the bus 702. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is for representing the bus in FIG. 7, but this does not mean that there is only one bus or only one type of bus. The bus 702 may include a path for information transmission between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid state drive (solid state drive, SSD).

The memory 706 stores executable program code. For example, the computing device is configured as the server configured to implement the cloud platform. The processor 704 executes the executable program code to separately implement functions of the requirement management node 601, the code hosting node 602, and the IDE management node 603, thereby implementing a function of the cloud platform in the cloud service-based project development method. In other words, the memory 706 stores instructions for performing the cloud service-based project development method.

The communication interface 708 uses a transceiver module, for example, but not limited to, a network interface card or a transceiver, to implement communication between the computing device 700 and another device or a communication network.

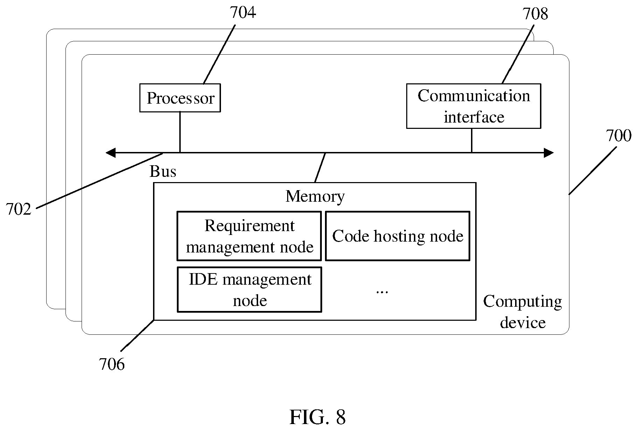

An embodiment of this application further provides a computing device cluster. The computing device cluster includes at least one computing device. FIG. 8 is a diagram of a structure of a computing device cluster according to an embodiment of this application. As shown in FIG. 8, the computing device cluster includes at least one computing device 700. A memory 706 of one or more computing devices 700 in the computing device cluster may store same instructions for performing the cloud service-based project development method.

In some possible implementations, the memory 706 of the one or more computing devices 700 in the computing device cluster may alternatively store some instructions for performing the cloud service-based project development method. In other words, a combination of the one or more computing devices 700 may jointly execute the instruction for performing the cloud service-based project development method.

It should be noted that memories 706 of different computing devices 700 in the computing device cluster may store different instructions, which are separately used for performing some functions of the cloud service-based project development system shown in FIG. 6. That is, instructions stored in the memories 706 of the different computing devices 700 may implement all or some functions of the requirement management node 601, the code hosting node 602, and the IDE management node 603.

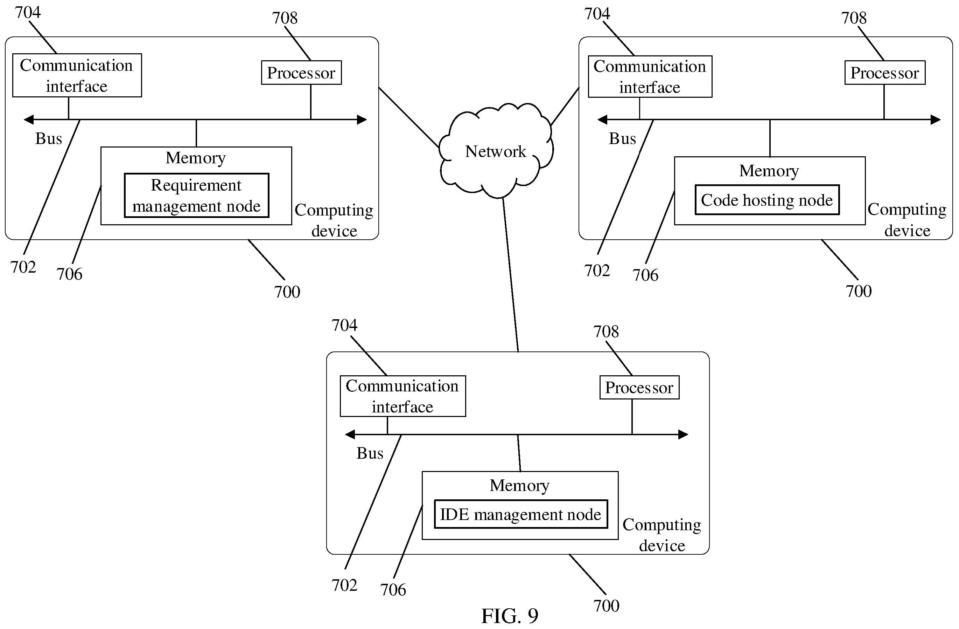

In some embodiments, the one or more computing devices in the computing device cluster may be connected through a network. The network may be a wide area network, a local area network, or the like. FIG. 9 is a diagram of a connection manner of a computing device cluster according to an embodiment of this application. As shown in FIG. 9, two computing devices 700 are connected through a network. Specifically, the computing device is connected to the network through a communication interface in each of the computing devices. In this type of possible implementation, in a connection manner between computing device clusters shown in FIG. 9, because of considering different nodes in the cloud service-based project development system that is shown in FIG. 6 and that is provided in this application, memories of different computing devices store instructions for performing functions of the different nodes. For example, a memory 706 of a computing device 700 stores instructions for executing a function of the requirement management node 601. A memory 706 of another computing device 700 stores instructions for executing a function of the code hosting node 602. A memory 706 of another computing device 700 stores instructions for executing a function of the IDE management node 603.

It should be understood that a function of the computing device 700 shown in FIG. 9 may alternatively be completed by a plurality of computing devices 700.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that, although the following descriptions use terms such as "first" and "second" to describe various elements, these elements should not be limited by the terms. These terms are simply used to distinguish one element from another. For example, without departing from the scope of the various examples, a first project may be referred to as a second project, and similarly, a second project may be referred to as a first project. Both the first project and the second project may be projects, and in some cases, may be separate and different projects.

The term "at least one" in this application means one or more, and the term "a plurality of" in this application means two or more. For example, a plurality of projects mean two or more projects.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of program structure information. The program structure information includes one or more program instructions. When the program instructions are loaded and executed on the computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, or an optical disc.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A cloud service-based project development system, used in a cloud platform, wherein the system comprises a requirement management node, a code hosting node, and an integrated development environment IDE management node, wherein
the requirement management node is configured to: obtain requirement information for a project, send a branch creation instruction to the code hosting node based on the requirement information, and send an instance creation instruction to the IDE management node, wherein the requirement information is used to describe a requirement and a process of the project;
the code hosting node is configured to create, in response to the branch creation instruction, a code branch corresponding to the project, wherein the code branch is used to store a code file of a to-be-developed function of the project; and
the IDE management node is configured to: create, in response to the instance creation instruction, an IDE instance corresponding to the project, and obtain and run the code file from the code branch of the code hosting node based on the IDE instance.

2. The system according to claim 1, wherein the requirement information comprises requirement description information and process information, the requirement description information indicates a function to be implemented by developing the project, and the process information indicates a code repository related to development of the project; and the requirement management node is configured to:
obtain the requirement description information, and send the requirement description information to a terminal used by a developer corresponding to the project; and
in response to a confirmation operation of the developer for the requirement description information, obtain the process information submitted by the developer.

3. The system according to claim 1 or 2, wherein the requirement information comprises the process information, and the process information indicates the code repository related to development of the project; and the code hosting node is configured to:
in response to the branch creation instruction, check out a baseline code branch corresponding to the project from the code repository, wherein the baseline code branch is used to store a code file of a developed function of the project; and
create the code branch based on the baseline code branch.

4. The system according to any one of claims 1 to 3, wherein the IDE instance is a cloud IDE instance running on the cloud platform; and the IDE management node is configured to:
in response to the instance creation instruction, create, based on environment configuration information of the project, a cloud IDE instance corresponding to the project, wherein the environment configuration information indicates a computing resource and a storage resource that are required by the project.

5. The system according to any one of claims 1 to 3, wherein the IDE instance is a local IDE instance running on a target terminal; and the IDE management node is configured to:
in response to the instance creation instruction, create, in the target terminal based on environment configuration information of the project, a local IDE instance corresponding to the project, wherein the environment configuration information indicates a computing resource and a storage resource that are required by the project.

6. The system according to any one of claims 1 to 5, wherein the requirement information further comprises test information, and the test information indicates a function testing path of the project; and the IDE management node is further configured to:
obtain, in response to a submission operation for a code file in the IDE instance, the code file submitted in the IDE instance, and perform function testing on the submitted code file based on the function testing path.

7. The system according to any one of claims 1 to 5, wherein the system further comprises a test node, and the requirement of the project comprises a to-be-resolved problem of the project; and the requirement management node is further configured to:
send a test script creation instruction to the test node based on the requirement information, wherein the test script creation instruction instructs to create a test script file of the project, and the test script file is used to test whether a code file of the project resolves the to-be-resolved problem; and
the test node is configured to: obtain, in response to a submission operation for a code file in the IDE instance, the code file submitted in the IDE instance, and perform function testing on the submitted code file based on the test script file corresponding to the project.

8. The system according to claim 6 or 7, wherein the requirement management node is further configured to:
when the function testing is passed, send a code merging instruction to the code hosting node, wherein the code merging instruction instructs to merge the code branch into the baseline code branch corresponding to the project, and the baseline code branch is used to store the code file of the developed function of the project; and
the code hosting node is further configured to: in response to the code merging instruction, merge, based on the requirement information, the code file submitted in the code branch into the code file that is of the developed function of the project and that is stored in the baseline code branch.

9. A cloud service-based project development method, applied to a cloud service-based project development system, wherein the system comprises a requirement management node, a code hosting node, and an integrated development environment IDE management node; and the method comprises:
obtaining, by the requirement management node, requirement information for a project, sending a branch creation instruction to the code hosting node based on the requirement information, and sending an instance creation instruction to the IDE management node, wherein the requirement information is used to describe a requirement and a process of the project;
creating, by the code hosting node in response to the branch creation instruction, a code branch corresponding to the project, wherein the code branch is used to store a code file of a to-be-developed function of the project; and
creating, by the IDE management node in response to the instance creation instruction, an IDE instance corresponding to the project, and obtaining and running the code file from the code branch of the code hosting node based on the IDE instance.

10. The method according to claim 9, wherein the requirement information comprises requirement description information and process information, the requirement description information indicates a function to be implemented by developing the project, and the process information indicates a code repository related to development of the project; and obtaining the requirement information for the project comprises:
obtaining the requirement description information, and sending the requirement description information to a terminal used by a developer corresponding to the project; and
in response to a confirmation operation of the developer for the requirement description information, obtaining the process information submitted by the developer.

11. The method according to claim 9 or 10, wherein the requirement information comprises the process information, and the process information indicates the code repository related to development of the project; and
creating, in response to the branch creation instruction, the code branch corresponding to the project comprises:
in response to the branch creation instruction, checking out a baseline code branch corresponding to the project from the code repository, wherein the baseline code branch is used to store a code file of a developed function of the project; and
creating the code branch based on the baseline code branch.

12. The method according to any one of claims 9 to 11, wherein the IDE instance is a cloud IDE instance running on a cloud platform; and creating, in response to the instance creation instruction, the IDE instance corresponding to the project comprises:
in response to the instance creation instruction, creating, based on environment configuration information of the project, a cloud IDE instance corresponding to the project, wherein the environment configuration information indicates a computing resource and a storage resource that are required by the project.

13. The method according to any one of claims 9 to 11, wherein the IDE instance is a local IDE instance running on a target terminal; and creating, in response to the instance creation instruction, the IDE instance corresponding to the project comprises:
in response to the instance creation instruction, creating, in the target terminal based on environment configuration information of the project, a local IDE instance corresponding to the project, wherein the environment configuration information indicates a computing resource and a storage resource that are required by the project.

14. The method according to any one of claims 9 to 13, wherein the requirement information further comprises test information, and the test information indicates a function testing path of the project; and the method further comprises:
obtaining, by the IDE management node in response to a submission operation for a code file in the IDE instance, the code file submitted in the IDE instance, and performing function testing on the submitted code file based on the function testing path.

15. The method according to any one of claims 9 to 13, wherein the system further comprises a test node, and the requirement of the project comprises a to-be-resolved problem of the project; and the method further comprises:
sending, by the requirement management node, a test script creation instruction to the test node based on the requirement information, wherein the test script creation instruction instructs to create a test script file of the project, and the test script file is used to test whether a code file of the project resolves the to-be-resolved problem; and
obtaining, by the test node in response to a submission operation for a code file in the IDE instance, the code file submitted in the IDE instance, and performing function testing on the submitted code file based on the test script file corresponding to the project.

16. The method according to claim 14 or 15, wherein the method further comprises:
when the function testing is passed, sending, by the requirement management node, a code merging instruction to the code hosting node, wherein the code merging instruction instructs to merge the code branch into the baseline code branch corresponding to the project, and the baseline code branch is used to store the code file of the developed function of the project; and
in response to the code merging instruction, merging, by the code hosting node based on the requirement information, the code file submitted in the code branch into the code file that is of the developed function of the project and that is stored in the baseline code branch.

17. A computing device cluster, comprising at least one computing device, wherein each computing device comprises a processor and a memory; and
the processor of the at least one computing device is configured to execute instructions stored in the memory of the at least one computing device, so that the computing device cluster performs the cloud service-based project development method according to any one of claims 9 to 16.

18. A computer-readable storage medium, wherein the computer-readable storage medium is configured to store at least one segment of program code; and when the at least one segment of program code is run by a computing device, the computing device is enabled to perform the cloud service-based project development method according to any one of claims 9 to 16.

19. A computer program product, wherein when the computer program product runs on a computing device, the computing device is enabled to perform the cloud service-based project development method according to any one of claims 9 to 16.
